(19) **Europäisches Patentamt**
**European Patent Office**
**Office européen des brevets**

(11) **EP 2 363 301 B1**

(12) **EUROPÄISCHE PATENTSCHRIFT**

(45) Veröffentlichungstag und Bekanntmachung des Hinweises auf die Patenterteilung:
**19.06.2013 Patentblatt 2013/25**

(21) Anmeldenummer: **11165259.0**

(22) Anmeldetag: **24.02.2006**

(51) Int Cl.:
*B60B 27/00* *(2006.01)* *F16C 43/04* *(2006.01)*
*F16D 1/076* *(2006.01)*

(54) **Stirnverzahnung für eine antreibbare Radnabe**

Front cogging for a driven hub

Dentelure frontale pour moyeu de roue pouvant être entraîné

(84) Benannte Vertragsstaaten:
**FR GB IT**

(30) Priorität: **04.03.2005 DE 102005009938**

(43) Veröffentlichungstag der Anmeldung:
**07.09.2011 Patentblatt 2011/36**

(62) Dokumentnummer(n) der früheren Anmeldung(en) nach Art. 76 EPÜ:
**06706009.5 / 1 853 436**

(73) Patentinhaber: **Schaeffler Technologies AG & Co. KG**
**91074 Herzogenaurach (DE)**

(72) Erfinder:
• **Langer, Roland**
**97523, Schwanfeld (DE)**
• **Masur, Ernst**
**97508, Untereuerheim (DE)**
• **Niebling, Peter**
**97688, Bad Kissingen (DE)**
• **Füller, Benno**
**97753, Karlstadt (DE)**
• **Heiß, Ralf**
**97422, Schweinfurt (DE)**

(56) Entgegenhaltungen:
**DE-A1- 3 636 243    DE-C1- 3 116 720**
**US-A- 4 047 770    US-A- 6 146 022**

EP 2 363 301 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

### Gebiet der Erfindung

Die Erfindung betrifft eine Stirnverzahnung eines in Umfangsrichtung um eine Rotationsachse verlaufenden Zahnkranzes an einer Radlageranordnung für eine antreibbare Radnabe, wobei die Stirnverzahnung für einen spielfreien Eingriff in eine der Stirnverzahnung zugewandte Gegenverzahnung vorgesehen ist und dabei die Zähne der Stirnverzahnung so keilförmig ausgebildet sind, dass die geometrischen Linien der Stirnverzahnung zentral in einem gemeinsamen Punkt auf der Rotationsachse zusammentreffen und sich die Zähne somit in radiale Richtung auf die Rotationsachse erstrecken.

### Hintergrund der Erfindung

Eine derartige Stirnverzahnung ist in DE 31 16 720 C1 näher beschrieben. In die Stirnverzahnung greift eine entsprechende Gegenverzahnung einer Antriebswelle des Fahrzeuges ein. Die Gegenverzahnung ist in der Regel an einer Glocke oder an einem Stumpf der Glocke eines Gleichlaufgelenkes ausgebildet.

Bei der Montage des Antriebselementes in die Radnabenanordnung zentrieren sich das Antriebselement und die Radnabe bezüglich der Rotationsachse aufgrund der Geometrie der Hirth-Verzahnung zueinander. Eine hohe Rundlaufgenauigkeit an der Verbindung im Fahrbetrieb ist somit abgesichert.

Die Montage des Gelenkteils zur Nabe gestaltet sich einerseits aufgrund der Selbstzentrierung einfach, bedarf andererseits jedoch einer sehr hohen axialen Vorspannkraft.

Die Flanken aller Zähne der Stirnverzahnung stehen mit beiden Flanken aller Zähne der Gegenverzahnung im Eingriff. Die Verzahnungen sind mittels eines oder mehrerer Schraubelemente axial verspannt. Drehmomente werden durch den aus Flächenpressung erzeugten Kraft - Formschluss auf die Radnabe übertragen.

Die Verbindung des Gelenkteils mit einer Radnabe ist insbesondere dann von Vorteil, wenn hohe Momente vom Antrieb zum Rad oder u.U. auch im umgekehrten Momentenfluss übertragen werden sollen. Oft sind die üblicherweise eingesetzten Paarungen aus Innen- und Außenverzahnungen bauraumtechnisch und somit hinsichtlich der Festigkeit ausgereizt, so dass die Stirnverzahnung eine sichere und Bauraum sparende Alternative zu diesen ist. Die starre Auslegung zur Übertragung von hohen Drehmomenten zum Rad kann sich dann nachteilig auswirken, wenn im Falle von Überlast ein Bruch der Radnabe im ungünstigsten Fall zum Verlust des Fahrzeugrades führt.

Als gattungsbildend ist die Stirnverzahnung der DE 31 16 720 C1 anzusehen, die einen Zahnkranz mit keilförmigen Zähnen ausbildet und spielfrei mit einer Gegenverzahnung im Eingriff steht.

Ferner sind Radlagereinheiten aus dem Stand der Technik bekannt, die eine stirnverzahnte Radnabe (US 4,047,770; US 6,146,022) oder sogar einen stirnverzahnten Wälznietbund (DE 36 36 243 A1) aufweisen.

### Zusammenfassung der Erfindung

Die Aufgabe der Erfindung ist es daher, eine Stirnverzahnung zu schaffen mit deren Gestaltung die zuvor genannten Nachteile vermieden werden.

Erfindungsgemäß wird diese Aufgabe von einer Stirnverzahnung gemäß dem unabhängigen Anspruch 1 gelöst.

Der Erfindung liegt die Erkenntnis zugrunde, dass die Größe der Radien die Höhe der Zähne der Stirnverzahnung und damit den Widerstand der Verzahnung gegen Belastungen beeinflusst. Ausgestaltungen der Erfindung sehen deshalb vor, dass ein Quotient aus größter theoretischer Zahnhöhe des jeweiligen Zahnes und dem Kopfradius mindestens der Zahl Fünf und maximal der Zahl Neun ist:

$$5 \leq H_{th}/R \leq 9.$$

Die theoretische Zahnhöhe ist in der Symmetrie oder Teilungsebene der größte axiale Abstand zwischen einer ersten Schnittkante in der Kopfebene und einer zweiten Schnittkante in der Fußebene des Zahnes. In den Schnittkanten treffen jeweils zwei einander zugewandte geometrische Ebenen aufeinander, durch die zumindest der Teil der Flanken beschrieben ist, der mit der Gegenverzahnung im Eingriff steht. Demnach treffen sich in der ersten Schnittkante die geometrischen Ebenen der Flanken eines Zahnes, die den doppelten Flankenwinkel zwischen sich einschließen zahnkopfseitig. In der zweiten Schnittkante treffen sich die geometrischen Ebenen von jeweils zwei an jeweils einer Zahnlücke gegenüberliegenden Flanken zueinander benachbarter Zähne zahnfußseitig.

Gleichzeitig oder alternativ ist ein Quotient aus größter theoretischer Zahnhöhe des jeweiligen Zahnes und dem Fußradius mindestens der Zahl Sieben und maximal der Zahl Elf:

$$7 \leq H_{th}/r \leq 11.$$

Gleichzeitig oder alternativ ist ein Quotient aus größter theoretischer Zahnhöhe des jeweiligen Zahnes und der theoretischen Zahnfußbreite mindestens dem Wert 0,9 und maximal dem Wert 1,3:

$$0,9 \leq H_{th}/B_{th} \leq 1,3.$$

Die theoretische Zahnfußbreite ist jeweils der Abstand zwischen zwei zueinander benachbarten der zahnfußseitigen Schnittkanten.

Vorteilhafterweise sind die für den Eingriff vorgesehenen Flanken der Zähne der Stirnverzahnung jeweils mit einem Flankenwinkel größer als 20° und kleiner als 30° geneigt. Der Flankenwinkel ist im Falle einer symmetrisch ausgebildeten Verzahnung die Hälfte des Zahnwinkels. Die Flanken sind mit dem Flankenwinkel zu einer gedachten und von der Rotationsachse abgehenden Teilungsebene geneigt.

Den Abmessungen und Änderungen der Abmessungen von Stirnverzahnungen sind an Radlagerungen aus Bauraumgründen Grenzen gesetzt. Der Teilkreisdurchmesser (mittlerer Umfang der Stirnverzahnung um die Rotationsachse) der Verzahnung ist demnach in der Regel innerhalb sehr enger Grenzen festgeschrieben. Demnach kann das Verhalten der Verzahnung, beispielsweise gegen Belastungen aus den Antriebsdrehmomenten kaum oder nicht durch Änderungen des Teilkreises der Verzahnung beeinflusst werden. Mit der Erfindung wird die Geometrie der einzelnen Zähne der Verzahnung über den Flankenwinkel so beeinflusst, dass hinsichtlich Montage und hinsichtlich der Belastungen aus Drehmomenten eine optimale Anzahl von Zähnen auf vorgegebenem Umfang festgelegt werden kann. Der Flankenwinkel der spielfrei im Eingriff mit der Gegenverzahnung stehenden wirksamen Flanken beträgt vorzugsweise 22,5°. Durch diese Gestaltung sind die Vorspannkräfte bei der Montage wegen der relativ niedrigen Axialkraftkomponenten in der Verzahnung gering gehalten. Der Querschnitt jedes einzelnen Zahnes in der Zahnwurzel ist so ausgelegt, dass die Stirnverzahnung hohe Drehmomente im Nennbetrieb überträgt, jedoch bei einem vorgeschriebenen Bruchmoment nachgibt.

Mit einer Ausgestaltung der Erfindung ist vorgesehen, dass Zahnlücken der Stirnverzahnung zumindest zwischen jeweils zwei an der Zahnlücke einander gegenüberliegenden der Flanken (von Flanke zu Flanke) mit wenigstens einem Fußradius konkav verrundet sind - und dass der Zahnkopf des jeweiligen der Zähne zumindest von einer Flanke zur anderen Flanke eines jeweiligen der Zähne mit wenigstens einem konvexen Kopfradius verrundet ist. Es ist außerdem vorgesehen, dass der Kopfradius immer größer ist als der Fußradius. Aufgrund dessen berührt der Zahnkopf der Gegenverzahnung nicht die Zahnlücke der Stirnverzahnung im Grund und der Zahnkopf der Stirnverzahnung nicht die Zahnlücke der Gegenverzahnung im Grund. Das spielfreie Anliegen der wirksamen Flanken ist abgesichert. Die Stirnverzahnung und die Gegenverzahnung nach Erfindung können identisch ausgebildet sein. Wenn die Verzahnung vorzugsweise spanlos durch Umformen mit sog. Döpperwerkzeugen eingebracht wird, kann für beide Verzahnungen das gleiche Werkzeug verwendet werden.

Mit der erfindungsgemäßen Geometrie ist an der Radnabenlagerung in der Drehmomentenverbindung zwischen Gelenkwelle und Rad eine Sollbruchstelle in der Stirnverzahnung geschaffen, die weg von sicherheitsrelevanten Teilen, zum Beispiel vom Radlager entfernt, angeordnet ist. Der durch Drehmomente um die Rotationsachse belastete Gesamtquerschnitt des Materials der Stirnverzahnung weist dadurch einen geringeren Widerstand gegen Verformungen auf, der bei Drehmomenten aus Überlastungen gezielt zur nachgebenden Verformung der Verzahnung führt. Jeder weitere durch die gleichen Drehmomente belastete und von der Stirnverzahnung entfernte Querschnitt des Materials der Radnabe weist höhere Widerstandsmomente auf. Der Gesamtquerschnitt ist dabei die Summe aller zeitgleich mit dem Einwirken des jeweiligen Gesamtdrehmomentes anteilig durch Drehmomente belasteten Einzelquerschnitte der Zähne, Zahnwurzeln und/oder aus Querschnitten im Material der Radnabe an den Übergängen zu den Zähnen. Bei Überlastung wird somit durch Zerstören des Zahneingriffs schlimmstenfalls der Antrieb zur Radnabe unterbrochen, die Radlagerung jedoch bleibt intakt.

Alternativ ist die Paarung aus den Stirnverzahnungen als eine Sicherheits-Ratschenkupplung ausgelegt. Die Radnabe und das Antriebselement sind mittels wenigstens eines Schraubbolzens axial mit Vorspannung gegeneinander verspannt. Der Schraubbolzen weist insgesamt, oder an jedem beliebigen Abschnitt/Querschnitt seines Materials, jedoch auf jeden Fall an einer schwächsten Stelle - wenigstens eines beliebigen Querschnittes - einen geringeren Widerstand gegen Verformung durch Belastungen aus Drehmomenten auf, als jeder beliebige Abschnitt der Radlagereinheit, der durch die Drehmomente bzw. durch aus den Drehmomenten resultierende Kräfte belastet ist. Diese Maßnahme greift insbesondere in den Fällen, in denen die Stirnverzahnung bzw. die Paarung aufgrund des großen Teilkreismessers so starr ausgebildet ist, dass diese nicht als Sollbruchstelle geeignet ist.

Ein zentraler Bolzen oder mehrere um die Rotationsachse angeordnete Bolzen weisen einen Gesamtquerschnitt auf, der nach der Größe des geforderten Bruchmoments ausgelegt ist. Auf die Verzahnung wirkende Drehmomente bei Überlastungen werden in der Verzahnung aufgrund der erfindungsgemäßen Flankengeometrie in Axialkräfte umgesetzt, die den Bolzen axial soweit dehnen, dass die Zahnflanken aneinander aufsteigen und sich schließlich voneinander lösen, so dass die drehfeste Verbindung aufgehoben ist. Der Schraubbolzen ist axial zumindest elastisch aber auch plastisch nachgebend so verformbar, dass dieser geringeren Widerstand gegen plastische und elastische Verformung zumindest in axiale Richtung aufweist als ein durch die axiale Vorspannung und die Drehmomente zeitgleich belasteter Gesamtquerschnitt der Verzahnung. Der Widerstand ist eine Axialkraft auf die Schraubverbindung kleiner gleich einer axialen Lösekraft, bei der die ineinander greifenden Verzahnungen beginnen sich entgegen der Vorspannkraft voneinander zu lösen.

Es ist auch denkbar, an einer Stirnverzahnung eine Kombination aus Sollbruchstelle in der Stirnverzahnung und Dehnelement Bolzen zu verwirklichen.

Unter Widerstand ist in dieser Erfindung das Vermögen eines Flächenabschnittes des Materials Belastungen aus Biegung (Widerstandsmoment, Torsion, Zug und Druck) zu widerstehen zu verstehen. Die Belastungen sind zunächst als Moment um die Rotationsachse eingeleitet und dann an der Verzahnung in Axial- und Tangentialkraftkomponenten umgesetzt.

**Beschreibung der Zeichnungen**

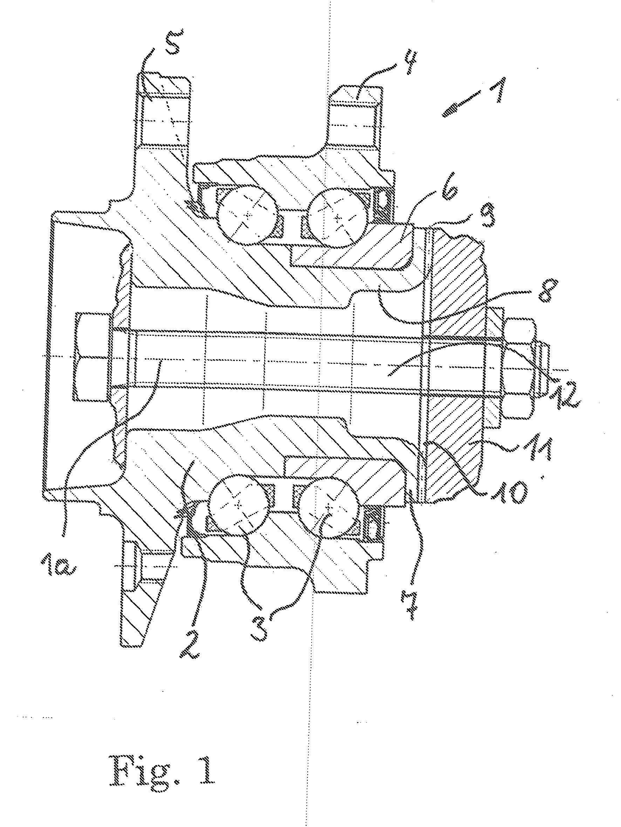

Figur 1 zeigt eine Radlageranordnung 1 mit einer Radnabe 2, zwei Reihen Wälzkörper 3 und einem Fahrzeugflansch 4. Die Radnabe 2 weist einen Flansch 5 zur Befestigung eines nicht dargestellten Fahrzeugrades auf und ist über die Wälzkörper 3 um die Rotationsachse 1a drehbar zum fahrzeugfesten Fahrzeugflansch 4 gelagert. Auf der Radnabe 2 sitzt ein Innenring 6 auf dem eine Reihe der Wälzkörper 3 abläuft. Der Innenring 6 ist mittels eines Bundes 7 axial auf der Radnabe 2 gehalten. Außerdem ist die Schrägkugellageranordnung mittels des Bundes 7 vorgespannt. Der Bund 7 ist einmaterialig mit einem hohlen Abschnitt 8 der Radnabe 2 ausgebildet und von diesem aus radial nach außen umgelegt.

In die in axiale Richtung gewandte Seite des Bordes 7 ist ein Ausführungsbeispiel einer erfindungsgemäßen Stirnverzahnung 9 spanlos durch umformen, wie Kaltfließpressen, Prägen oder Walzen eingebracht. Die Stirnverzahnung ist mit einer entsprechenden Gegenverzahnung 10 an einem nicht weiter dargestellten Antriebselement 11 gepaart. Die Verzahnungen 9 und 10 weisen zueinander die gleiche Anzahl an Zähnen 13 auf, sind einander axial zugewandt, greifen spielfrei ineinander und sind mittels eines Schraubbolzens 12 axial ineinander und gegeneinander verspannt.

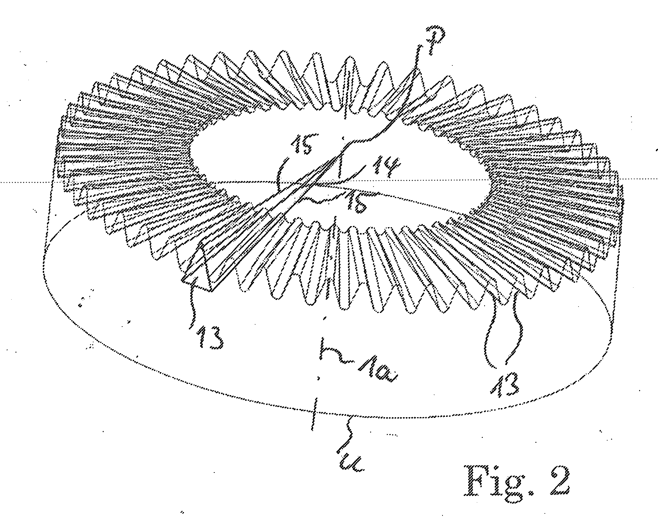

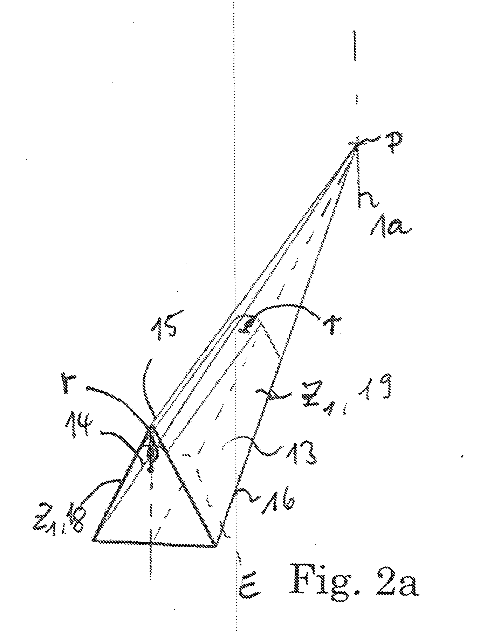

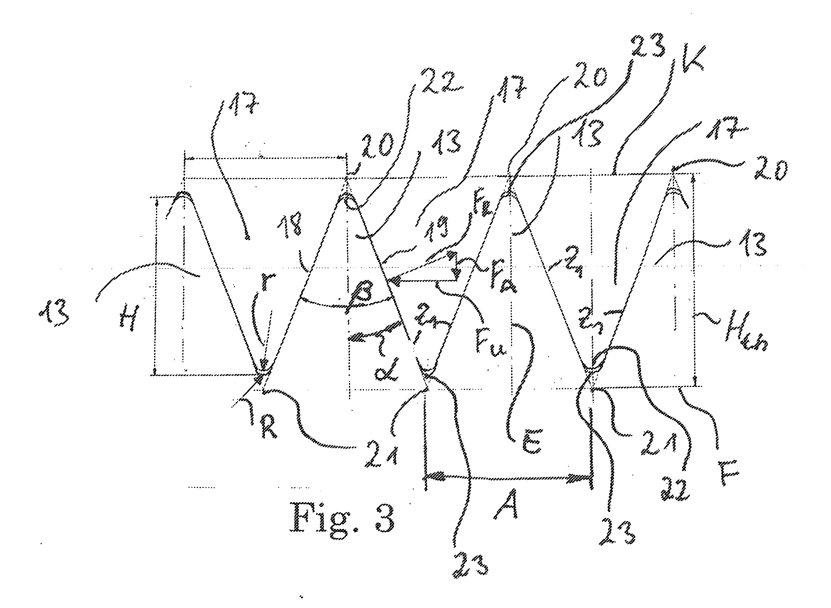

Ausführungsbeispiele der Verzahnungen 9 und 10 sind in Figur 2, 2a und 3 vereinfacht dargestellt. In Figur 2 ist die Verzahnung 9, 10 perspektivisch dargestellt und zeigt dabei wie der einzelne keilförmig ausgebildete Zahn 13 kopf-, fuß- und flankenseitig durch radial ausgerichtete geometrische Linien 14, 15, 16 beschrieben ist, die sich in dem Schnittpunkt P treffen. Der Schnittpunkt P ist der gemeinsame Schnittpunkt für alle radial verlaufenden geometrischen Linien des Zahnkranzes. Der Zahnwinkel β, das Zweifache des Zahnflankenwinkels α ist dabei über die gesamte radiale Erstreckung jedes einzelnen Zahnes 13 konstant.

Wie insbesondere aus Figur 2a erkennbar ist, ist die Zahnflanke durch eine Ebene beschrieben, die um den Flankenwinkel α zur gedachten Ebene E geneigt ist. Die Ebene E verläuft in Richtung mit abnehmenden Abstand A zu zwei umfangsseitig benachbarten Zahnlücken 17. Der Abstand wird mit zunehmender Annäherung an die Rotationsachse kleiner. Die Ebene E trifft in P auf die Ebenen Z1, die den Verlauf der Zahnflanken 18, 19 beschreiben. Die Linie 15 fällt ausgehend von höchster Zahnhöhe H außen zu P hin ab. Demnach nimmt die Zahnhöhe H von außen mit abnehmender radialer Entfernung zur Rotationsachse 1a hin ab.

Figur 3 zeigt den Querschnitt durch Zähne 13 der Verzahnung an der Stelle mit der höchsten Zahnhöhe H. Die Zahnlücken 17 der Stirnverzahnung 9 sind fast vollständig durch die Zähne der Gegenverzahnung 10 und die Lücken der Gegenverzahnung 10 fast vollständig durch die Zähne 13 der Stirnverzahnung 9 ausgefüllt. Es verbleibt ein axialer Spalt zwischen Zahnkopf 22 und Mitte 23 der Zahnlücke. Die einem der jeweiligen Zähne 13 gemeinsamen Ebenen Z1 treffen kopfseitig in der Schnittkante 20 aufeinander und sind jeweils mit α zu E geneigt. Die Schnittkanten 20 sind mit gleicher Teilung T zueinander angeordnet. Fußseitig treffen die Ebenen Z1 in der Schnittkante 21 aufeinander. Die Schnittkanten 20 oder 21 liegen in den Ebenen K bzw. F. Die theoretische Kopfhöhe $H_{th}$ zwischen der radialen Kopfebene K und der radialen Fußebene F ist bei konstantem Umfang U der Verzahnung 9 von α abhängig. Der im Bild senkrechte und an der Stirnverzahnung 9 axiale Abstand H ist bei unveränderter Höhe $H_{th}$ von den Radien Kopfradius R und Fußradius r abhängig. R ist größer r (R > r). Die spielfreie Paarung der Verzahnungen 9 und 10 ist so abgesichert, da in den Zahnlücken 17 immer ein Abstand zwischen Zahnkopf 22 und Mitte 23 Zahnlücke 17 verbleibt. Drehmomente Md um die Rotationsachse 1a verursachen in der Verzahnung Kraftkomponenten FR, FA und FU. FA wird von einer weiteren Axialkraftkomponente überlagert, die durch die Verspannung der Verzahnungen der mit mittels des Schraubbolzens 12 gegeneinander vorgespannt sind.

**Bezugszeichen**

1    Radlageranordnung

1a    Rotationsachse

2    Radnabe

3    Wälzkörper

4    Fahrzeugflansch

5    Flansch

6    Innenring

7    Bund

8    Abschnitt

9    Stirnverzahnung

10 Gegenverzahnung

11 Antriebselement

12 Schraubbolzen

13 Zahn

14 geometrische Linie

15 geometrische Linie

16 geometrische Linie

17 Zahnlücke

18 Zahnflanke

19 Zahnflanke

20 Schnittkante

21 Schnittkante

22 Zahnkopf

23 Mitte

**Patentansprüche**

1. Stirnverzahnung (9) eines in Umfangsrichtung um eine Rotationsachse (1a) verlaufenden Zahnkranzes an einer Radlageranordnung (1) für eine antreibbare Radnabe (2), wobei die Stirnverzahnung (9) spielfrei mit einer der Stirnverzahnung (9) zugewandten Gegenverzahnung (10) in Eingriff steht und dabei die Zähne (13) der Stirnverzahnung (9) so keilförmig ausgebildet sind, dass die geometrischen Linien (14; 15; 16) der Stirnverzahnung (9) zentral in einem gemeinsamen Punkt auf der Rotationsachse (1a) zusammentreffen und sich die Zähne (13) somit radial auf die Rotationsachse (1a) zu erstrecken **dadurch gekennzeichnet, dass** die theoretische Zahnhöhe in der Teilungsebene der größte axiale Abstand zwischen einer ersten Schnittkante (20) und einer zweiten Schnittkante (21) ist, und wobei sich in den Schnittkanten (20; 21) zwei einander zugewandte geometrische Ebenen schneiden, und dabei jede der Ebenen eine der Flanken (18; 19) geometrisch begrenzt, wobei sich in der ersten Schnittkante (20) die geometrischen Ebenen der Flanken (18; 19) eines Zahnes (13) zahnkopfseitig schneiden und sich in der zweiten Schnittkante (21) die geometrischen Ebenen von jeweils zwei an jeweils einer Zahnlücke (17) einander gegenüberliegenden Flanken (18; 19) zueinander benachbarter Zähne (13) zahnfußseitig schneiden, wobei

- ein erster Quotient aus größter theoretischer Zahnhöhe des jeweiligen Zahnes (13) und dem Kopfradius mindestens der Zahl Fünf und maximal der Zahl Neun entspricht, und/oder
- ein zweiter Quotient aus größter theoretischer Zahnhöhe des jeweiligen Zahnes (13) und dem Fußradius mindestens der Zahl Sieben und maximal der Zahl Elf entspricht.

2. Stirnverzahnung nach Anspruch 1, **dadurch gekennzeichnet, dass** der Zahnkopf des jeweiligen Zahnes (13) von einer Flanke (17) zur anderen Flanke (17) mit wenigstens einem konvexen Kopfradius verrundet ist, wobei der Kopfradius größer ist als der Fußradius.

3. Stirnverzahnung nach Anspruch 1, **dadurch gekennzeichnet, dass** ein durch Drehmomente um die Rotationsachse (1 a) belasteter Gesamtquerschnitt des Materials der Stirnverzahnung (9) einen geringeren Widerstand gegen Verformungen infolge der Drehmomente aufweist als jeder weitere beliebige durch die gleichen Drehmomente belastete Querschnitt des Materials der Radnabe (2), wobei der Gesamtquerschnitt die Summe aller anteilig durch Drehmomente belasteten Einzelquerschnitte des einteilig mit der Radnabe (2) ausgebildeten Materials der Stirnverzahnung (9) ist.

4. Stirnverzahnung (9) nach Anspruch 1, **dadurch gekennzeichnet, dass** die Stirnverzahnung (9) an einem Bund (7) der Radnabe (2) ausgebildet ist, mit dem wenigstens ein auf der Radnabe (2) sitzenden Innenring für wenigstens eine Reihe Wälzkörper zumindest axial auf der Radnabe (2) gehalten ist, wobei der Bund (7) aus einem hohlen Abschnitt der Radnabe (2) radial nach außen geformt ist.

5. Radlageranordnung (1) mit einer Stirnverzahnung (9) nach Anspruch 1, bei der die Gegenverzahnung (10) an einem mit der Radnabe (2) axial verspannten Antriebselement ausgebildet ist, wobei die Radnabe (2) und das Antriebselement mittels wenigstens eines Schraubbolzens (12) axial mit Vorspannung gegeneinander verspannt sind, **dadurch gekennzeichnet, dass** wenigstens ein beliebiger Dehnungsabschnitt des axial verspannten Schraubbolzens (12) einen kleineren Widerstand gegen Verformung durch Drehmomente auf die Stirnverzahnung (9) aufweist als jeder weitere beliebige durch die gleichen Drehmomente belastete Querschnitt des Materials der Radnabe (2).

**Claims**

1. Spur toothing system (9) of a crown gear, which runs about a rotational axis (1a) in the circumferential direction, on a wheel bearing arrangement (1) for a drivable wheel hub (2), the spur toothing system (9) being in play-free engagement with a mating toothing system (10) which faces the spur toothing system (9), and the teeth (13) of the spur toothing system (9) being of wedge-shaped configuration here such that the geometric lines (14; 15; 16) of the spur toothing system (9) meet centrally at a common point on the rotational axis (1a), and the teeth (13) therefore extending radially towards the rotational axis (1a), **characterized in that** the theoretical tooth height in the pitch plane is the greatest axial spacing between a first sectional edge (20) and a second sectional edge (21), and two geometric planes which face one another intersecting in the sectional edges (20; 21), and each of the planes geometrically delimiting one of the flanks (18; 19) here, the geometric planes of the flanks (18; 19) of a tooth (13) intersecting on the tooth-tip side in the first sectional edge (20), and the geometric planes of in each case two flanks (18; 19), lying opposite one another at in each case one tooth gap (17), of mutually adjacent teeth (13) intersecting on the tooth-root side in the second sectional edge (21),

- a first quotient of the greatest theoretical tooth height of the respective tooth (13) and the tip radius corresponding at least to the number five and at most to the number nine, and/or
- a second quotient of the greatest theoretical tooth height of the respective tooth (13) and the root radius corresponding at least to the number seven and at most to the number eleven.

2. Spur toothing system according to Claim 1, **characterized in that** the tooth tip of the respective tooth (13) is rounded with at least one convex tip radius from one flank (17) to the other flank (17), the tip radius being greater than the root radius.

3. Spur toothing system according to Claim 1, **characterized in that** an overall cross section, loaded by torques about the rotational axis (1a), of the material of the spur toothing system (9) has a lower resistance to deformations as a consequence of the torques than every further arbitrary cross section, loaded by the same torques, of the material of the wheel hub (2), the overall cross section being the sum of all individual cross sections, loaded proportionately by torques, of the material of the spur toothing system (9), which material is formed integrally with the wheel hub (2).

4. Spur toothing system (9) according to Claim 1, **characterized in that** the spur toothing system (9) is formed on a collar (7) of the wheel hub (2), by way of which at least one inner ring, seated on the wheel hub (2), for at least one row of rolling bodies is held at least axially on the wheel hub (2), the collar (7) being shaped radially to the outside from a hollow section of the wheel hub (2).

5. Wheel bearing arrangement (1) having a spur toothing system (9) according to Claim 1, in which wheel bearing arrangement (1) the mating toothing system (10) is formed on a drive element which is clamped axially with the wheel hub (2), the wheel hub (2) and the drive element being clamped axially against one another with prestress by means of at least one threaded bolt (12), **characterized in that** at least one arbitrary expansion section of the axially clamped threaded bolt (12) has a lower resistance to deformation by way of torques on the spur toothing system (9) than every further arbitrary cross section, loaded by the same torques, of the material of the wheel hub (2).

**Revendications**

1. Denture frontale (9) d'une couronne dentée s'étendant dans la direction périphérique autour d'un axe de rotation (1a) sur un agencement de palier de roue (1) pour un moyeu de roue pouvant être entraîné (2), la denture frontale (9) étant en prise sans jeu avec une denture conjuguée (10) tournée vers la denture frontale (9) et les dents (13) de la denture frontale (9) étant réalisées en l'occurrence en forme de clavette de telle sorte que les lignes géométriques (14 ; 15 ; 16) de la denture frontale (9) coïncident centralement en un point commun sur l'axe de rotation (1a) et que les dents (13) s'étendent ainsi radialement vers l'axe de rotation (1a), **caractérisée en ce que** la hauteur théorique des dents dans le plan de séparation est la plus grande distance axiale entre une première arête de coupe (20) et une deuxième arête de coupe (21), et deux plans géométriques tournés l'un vers l'autre se croisant dans les arêtes de coupe (20 ; 21), et en l'occurrence chacun des plans limitant de manière géométrique l'un des flancs (18 ; 19), les plans géométriques des flancs (18 ; 19) d'une dent (13) se coupant du côté de la tête de dent dans la première arête de coupe (20) et les plans géométriques de deux flancs opposés l'un à l'autre (18 ; 19) de dents adjacentes respectives (13) au niveau d'un espace entre dents respectif (17) se coupant du côté de la base de dent dans la deuxième arête de coupe (21),

- un premier quotient de la plus grande hauteur de dent théorique de la dent respective (13) sur le rayon de tête correspondant au moins au nombre cinq et au maximum au nombre neuf, et/ou
- un deuxième quotient de la plus grande hauteur de dent théorique de la dent respective (13) sur le rayon de base correspondant au moins au nombre sept et au maximum au nombre onze.

2. Denture frontale selon la revendication 1, **caractérisée en ce que** la tête de dent de la dent respective (13) est arrondie d'un flanc (17) à l'autre (17) avec au moins un rayon de tête convexe, le rayon de tête étant supérieur au rayon de base.

3. Denture frontale selon la revendication 1, **caractérisée en ce qu'**une section transversale totale du matériau de la denture frontale (9) sollicitée par des couples autour de l'axe de rotation (1a) présente une plus faible résistance aux déformations dues aux couples que chaque autre section transversale quelconque du matériau du moyeu de roue (2) sollicitée par les mêmes couples, la section transversale totale étant la somme de toutes les sections transversales individuelles sollicitées en partie par des couples du matériau de la denture frontale (9) réalisé d'une seule pièce avec le moyeu de roue (2).

4. Denture frontale (9) selon la revendication 1, **caractérisée en ce que** la denture frontale (9) est réalisée sur un épaulement (7) du moyeu de roue (2), avec lequel au moins une bague interne pour au moins une rangée de corps de roulement reposant sur le moyeu de roue (2) est maintenue au moins axialement sur le moyeu de roue (2), l'épaulement (7) étant formé radialement vers l'extérieur à partir d'une portion creuse du moyeu de roue (2).

5. Agencement de palier de roue (1) comprenant une denture frontale (9) selon la revendication 1, dans lequel la denture conjuguée (10) est réalisée sur un élément d'entraînement serré axialement avec le moyeu de roue (2), le moyeu de roue (2) et l'élément d'entraînement étant serrés l'un contre l'autre axialement avec une précontrainte au moyen d'au moins un boulon fileté (12), **caractérisé en ce qu'**au moins une portion d'étendue quelconque du boulon fileté serré axialement (12) présente une plus faible résistance à la déformation par des couples sur la denture frontale (9) que chaque autre section transversale du matériau du moyeu de roue (2) sollicitée par les mêmes couples.

Fig. 1

Fig. 2

Fig. 2a

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3116720 C1
- US 4047770 A

- US 6146022 A
- DE 3636243 A1